# EUROPEAN PATENT APPLICATION

(11) **EP 1 001 594 A2**
(43) Date of publication of application: **17.05.2000**
(21) Application number: 99122294.4
(22) Date of filing: 09.11.1999
(51) Int. Cl.: H04M 3/523

(54) **Automatic call distribution system**

(30) Priority: 10.11.1998 US 189185
(71) Applicant: AG COMMUNICATION SYSTEMS CORPORATION, Phoenix, Arizona 85072-2179 (US)
(72) Inventor: Holm, Robert K., Scottsdale, Arizona 85255 (US); Sethia, Kamal S., Phoenix, Arizona 85022 (US)
(74) Representative: Blumbach, Kramer & Partner GbR

(57) **Abstract**

An automatic call distribution (ACD) system connected to a switch in a telephone network over an ISDN PRI interface. The ACD system receives a customer call and determines which agent should handle the call. The ACD system places an outgoing call to the agent. When the agent answers, the ACD system exchanges ISDN PRI Two B-Channel Transfer (TBCT) messages with the switch to cause the incoming customer and outgoing agent calls to be directly connected. When the incoming and outgoing calls are directly connected, the ACD is disconnected from both calls. The ACD is notified when the call between the agent and the customer is cleared.

## Description

### FIELD OF THE INVENTION

The present invention relates to automatic call distribution systems for incoming telephone calls, and more particularly to a network implemented automatic call distribution system.

### BACKGROUND OF THE INVENTION

An automatic call distribution (ACD) system is a call management system that typically routes incoming telephone calls to agents in telemarketing and service inquiry call centers and provides management information reporting capabilities.

Typically, an ACD system will recognize and answer an incoming call, look in it's database for instructions on how to handle the call, and based on these instructions, send the call to an agent or agent group. If there are no agents available to answer the call, the call is sent to a recording that plays music and/or a message asking the caller to not hang up and to wait until an agent becomes available.

The ACD system monitors the status of each agent and selects an agent to handle the incoming call. Agents are generally grouped to handle certain types of calls. The ACD system will direct an incoming call to an agent group based on, for example, the called number, the calling number or a caller selection in an IVR system. One or more queues are associated with each agent group, and the agent selected by the ACD system to receive a particular call can be based on simple queue criteria such as round-robin or longest idle, or based on specific areas of agent expertise. Some ACD systems have features that allow calls that would otherwise be directed to a primary agent group that is experiencing long queue times to be directed to a secondary agent group until the queue times in the primary agent group are below a threshold value.

ACD systems also provide real time or post-processing management information reporting. This information typically includes incoming call information such as how many calls arrived per time interval, what telephone numbers were called, what were the calling numbers, how many calls were put on hold, and how many on-hold calls hung up. The information also typically includes agent performance information such as the number of calls handled by each agent and the time spent in various stages of call handling.

There are generally two types of ACD systems. The first type is implemented as a service provided by a telephone service provider at a provider's central office switching system. The ACD system is either integrated as part of the central office switch, or an adjunct system interfacing to the central office switch using a proprietary interface. This service offering usually provides greater freedom in agent location and relief from hardware maintenance but often at the cost of reduced functionality and reduced customer control.

The second type of ACD system employs customer premise switching hardware to make connections between the incoming calls and the agents handling the calls. The switching hardware can comprise a specialized PBX to handle all ACD system routing and management information functions. The hardware can also comprise a PBX in conjunction with an ACD adjunct. In this arrangement, the ACD adjunct typically uses a proprietary interface to the PBX to tell the PBX where to route the incoming call. These systems usually require a substantial initial investment as well as ongoing maintenance and upgrade expenses.

Accordingly, it is the object of the present invention to provide an automatic call distribution system that requires little or no initial investment on the part of the user, requires little or no modifications to a telephone service provider's central office switches, is easily maintained and upgraded, is switch independent, and uses existing protocols and standards rather than proprietary interfaces.

### SUMMARY OF THE INVENTION

The present invention provides an automatic call distribution (ACD) system on a network-grade platform connected to a central office switch using an ISDN Primary Rate Interface (PRI). The ACD system determines which agent should receive the incoming call and places an outgoing call to the agent. When the agent answers, the ACD system exchanges ISDN PRI Two B-Channel Transfer (TBCT) messages with the switch to cause the incoming and outgoing calls to be directly connected. When the incoming and outgoing calls are directly connected, the ACD system is disconnected from both calls. The ACD system is notified when the call between the agent and the customer is cleared. The ACD system of the present invention provides all queue management and management information functions.

### DESCRIPTION OF THE DRAWINGS

FIGS. 1 illustrate the basic operation of the ISDN PRI Two B-Channel Transfer feature.

FIG. 2 shows a block diagram of the preferred embodiment of the automatic call distribution system of the present invention.

### DESCRIPTION OF THE PREFERRED EMBODIMENT

The operation of the present invention is based on the Two B-Channel Transfer feature, as described in Bellcore standards publication GR-2865-CORE, "Generic Requirements for ISDN PRI Two B-Channel Transfer," Issue 2, May 1997, which is hereby incorporated by reference. Those skilled in the art will be familiar with this publication and the extensive list of related standards documents included in this publication.

ISDN PRI Two B-Channel Transfer (TBCT) enables a user (controller) on a Primary Rate Interface (PRI) to request the Stored Program Controlled Switch (SPCS) to which the controller is connected to connect together two independent calls on the controller's PRI interface. When the switch accepts the TBCT request, the controller is released from the call and the two independent calls are connected together directly across the switch. TBCT is allowed when: the switch is TBCT capable and enabled; the controller subscribes to TBCT; the two calls are of compatible bearer capabilities; at least one of the two calls is answered; the other call, if incoming to the controller, must be answered, or if outgoing from the controller, may be either answered or alerting. When the transferred call is cleared, a notification is sent from the switch to the controller over the PRI that was used to send the TBCT request.

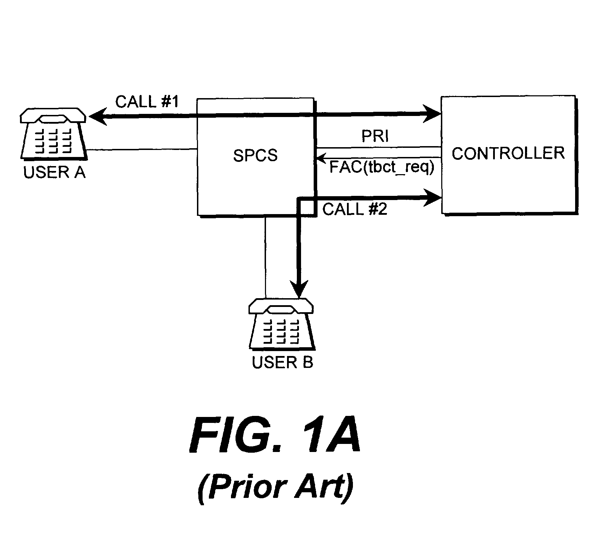

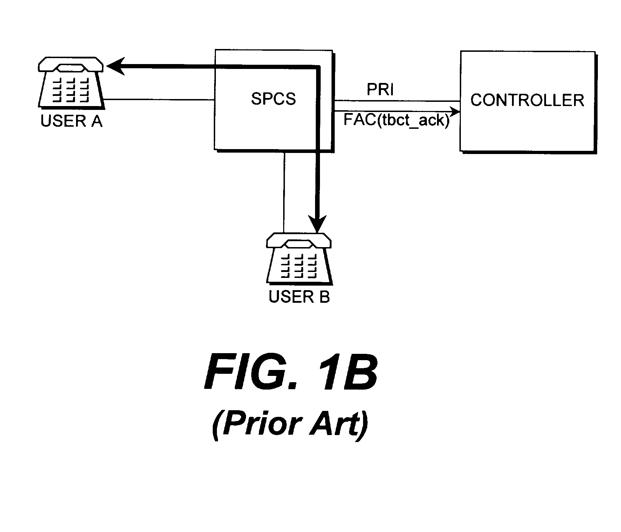

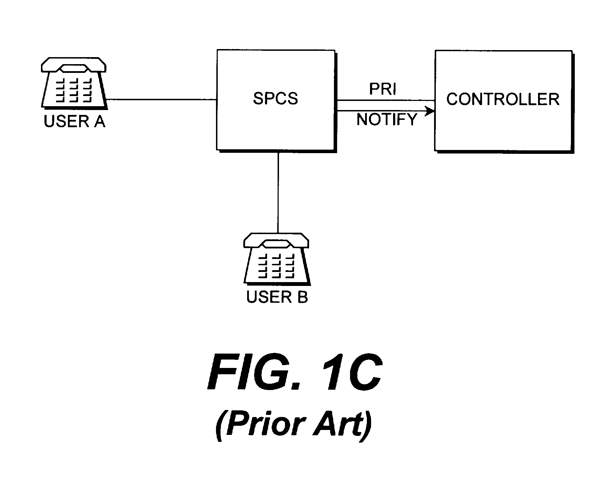

FIGS. 1 illustrate the basic operation of the ISDN PRI Two B-Channel Transfer feature. FIG. 1A shows telephone instruments USER A and USER B connected to central office switch SPCS. The CONTROLLER is connected to switch SPCS over ISDN Primary Rate Interface PRI. As illustrated, a first call CALL #1 has been established between telephone USER A and the CONTROLLER through switch SPCS, and a second call CALL #2 has been established between telephone USER B and the CONTROLLER through switch SPCS. Each call uses a B-channel of interface PRI. The CONTROLLER has issued a FACILITY message FAC(tbct_req) to switch SPCS over the D-channel of interface PRI requesting that telephones USER A and USER B be connected directly through switch SPCS. Assuming that call CALL #1 was answered and resulted in the establishment of an outgoing call CALL #2 from the CONTROLLER, request FAC(tbct_req) can be sent from the CONTROLLER no earlier than when alerting has started on call CALL #2. However, request FAC(tbct_req) can be sent anytime after alerting on call CALL #2 while CALL #2 is still active.

FIG. 1B illustrates the subsequent condition where switch SPCS has accepted request FAC(tbct_req) and has connected telephones USER A and USER B directly. An acknowledgment message FAC(tbct_ack) from switch SPCS to the CONTROLLER indicates that the request was accepted. Switch SPCS then disconnects calls CALL #1 and CALL #2 from the CONTROLLER, sending a DISCONNECT message to the CONTROLLER with each disconnect. The CONTROLLER is now no longer involved in the call and the B-channels that were associated with calls CALL #1 and CALL #2 have been released.

FIG. 1C illustrates the subsequent condition where the direct call between telephone instruments USER A and USER B has completed. A NOTIFY message from switch SPCS to the CONTROLLER indicates that the direct call has been cleared.

In the automatic call distribution system of the present invention, standard ISDN PRI functionality in conjunction with the TBCT feature is used to perform the telephone network interface functions. These network interface functions include recognizing and accepting an incoming customer call on the PRI interface of a network ACD platform, placing an outgoing call from the ACD platform to an appropriate agent, and issuing a TBCT request to directly connect the customer with the agent once the agent has answered the outgoing call. ACD functions, such as agent selection, agent status, queue management, management information collection and reporting and caller-on-hold treatment, are implemented in the ACD platform using known methods.

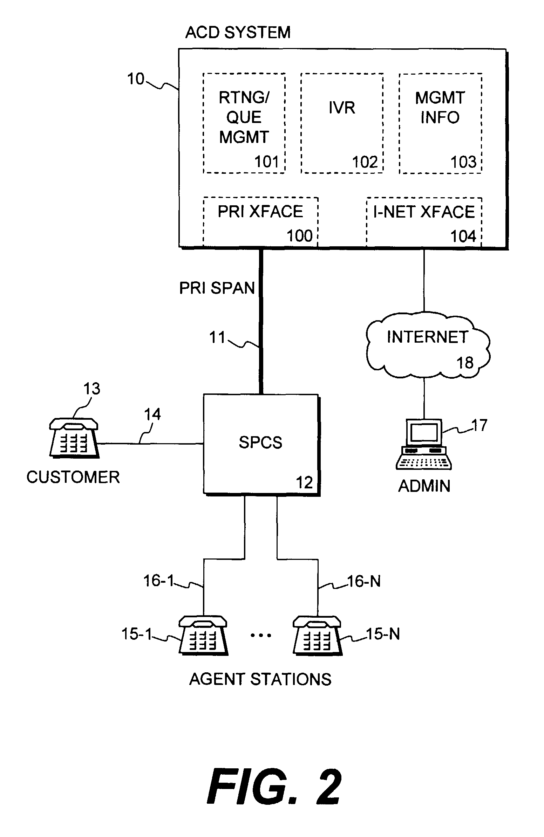

FIG. 2 shows a block diagram of a preferred embodiment of the automatic call distribution system of the present invention. ACD system 10 is connected over ISDN PRI span 11 to stored program control switch SPCS 12. Customer telephone instrument 13 is connected to SPCS 12 over connection 14. One or more agent telephone instruments 15 are also connected to SPCS 12 over connections 16. An administrative workstation 17 is connected over the Internet 18 to ACD system 10.

In the preferred embodiment, ACD system 10 is a general purpose computer, for example a PC, adapted to the application at hand through the implementation and cooperation of interface cards and program logic. Functional blocks representing related functions that the computer performs and which may involve program logic and one or more of the computer's resources including installed special purpose interface cards are represented in FIG. 2 by named boxes having dotted outlines within ACD system 10.

ACD system 10 performs two main functions: interfacing to the telephone network, and performing ACD functions. The telephone network interface functions are performed by PRI interface 100, which is connected to PRI span 11. PRI interface 100 includes an interface card installed in a PC slot and connected to PRI span 11 as well as program logic enabling control of the interface by ACD functionality. Several makes and models of PRI interface cards are commercially available. In the preferred embodiment, the PRI interface card will support Q.931 Call Associated Signaling (CAS) protocol, and Q.931 Non-Call Associated Signaling (NCAS) protocol Network to User NOTIFY messages to indicate the transferred call was cleared.

The ACD functions are performed by routing and queue management block 101, interactive voice response block 102 and management information block 103. Routing and queue management block 101 performs the ACD functions related to call handling including initial call treatment, on-hold call treatment, tracking agent call status, selecting an agent to which a customer call will be connected and overseeing the successful connection of the caller to an agent. Interactive voice response block 102 performs the ACD functions related to messages and music that may be played for the caller during various stages of the call, and collecting digits or voice information from the caller. Management information block 103 performs the ACD functions related to reporting incoming call information and agent performance. The ACD functionality communicates and works in cooperation with the PRI network interface through both software and hardware interfaces within the ACD system.

In the preferred embodiment, an administrative interface operated to perform administrative maintenance functions on ACD system 10 includes an administrative workstation 17 connected to Internet interface 104 over Internet 18. These administrative maintenance functions could include, for example, software updates and table maintenance.

In operation, an agent notifies ACD system 10 that they are available to accept customer calls, for example at the beginning of their shift or after a break, by calling a special purpose number on the ACD and responding appropriately to a logon/logoff script. Similarly, an agent would logoff at the end of their shift or at the beginning of a break.

A call is placed from customer telephone 13 to a directory number (DN) associated with a service desired by the customer. Switch SPCS 12 performs translation and directs the call to ACD system 10 over PRI span 11. PRI interface 100 answers the call and also receives additional call related information such as Dialed Number Identification Service (DNIS) and Automatic Number Identification (ANI) information contained in the ISDN PRI call setup message from switch SPCS 12. This additional call related information can be made available to the ACD function blocks by, for example, storing this information in shared memory locations. This information can be used, for example, in the selection of an agent. This information is also placed in the PRI call setup message sent on outbound calls from ACD system 10 to switch SPCS 12.

After the ACD functionality has determined an agent to which to connect the customer call, PRI interface 100 is directed to place an outgoing call to the agent. When the agent answers the outgoing call, PRI interface 100 is directed by the ACD functionality to issue a TBCT request to switch SPCS 12 to cause the customer call and the outgoing call to the agent to be directly connected. If the agent doesn't answer the call in a specified time interval or the agent telephone is busy, another agent is selected.

In the preferred embodiment, when the customer/agent call has been cleared, a notify message is sent to PRI interface 100 and the contents of the notify message is made available to the ACD functionality. This information is used to update agent status.

The ACD functions of the present invention are well known and can be designed and implemented to meet most any set of user requirements. One requirement, however, is that the ACD functionality of the present invention be able to exchange control information and data as required with PRI interface 100. Those skilled in the art of the present invention will understand the design and implementation of ACD functionality in light of user requirements, as well as the implementation and use of the PRI interface of the present invention. In particular, one skilled in the art will be able to implement the ACD system of the present invention without undue experimentation wherein a network PRI interface cooperates with ACD functionality.

### Other Embodiments

Although a preferred embodiment of the present invention of an automatic call distribution system using the PRI ISDN TBCT feature has been particularly shown and described, it is not intended to be exhaustive nor limit the invention to the embodiment disclosed. It will be apparent to those skilled in the art that modifications can be made to the present invention without departing from the scope and spirit thereof.

For example, although the preferred embodiment describes an ACD system implemented on a general purpose computer, any suitable platform that will accomplish the desired functionality can be used. Suitable platforms include, for example, special purpose computers designed expressly for the application at hand, or integrated systems involving hard-wired logic circuits or firmware. The ACD system may also be distributed over multiple cooperating platforms. For example, one platform may handle the PRI interface, a second platform may perform the ACD functions, and a third platform may perform database functions associated with the ACD functions.

Although a single PRI span 11 is shown connecting ACD system 10 to switch 12, multiple PRI spans may be used. The PRI ISDN TBCT feature is defined generally to handle multiple PRI spans, and in particular, to be able to directly connect calls on different PRI spans. Methods of implementing a multi-span interface are well known in the art.

Although the preferred embodiment shows the TBCT request being issued when the agent answers the outgoing call, the request can also be issued when alerting begins on the outgoing call. If the agent is not available to answer the call, the customer call can be directed to a traditional voice messaging system.

Although agent stations 15 are described as standard telephone instruments, they can be also implemented as "soft" phones, i.e., PC's with telephony interfaces. Also, agent stations 15 can be arranged to display caller and called number information as well as additional information relating to the customer call. ACD functionality would pass the customer call ANI, DNIS and the additional information on outbound calls from the ACD system in the ISDN PRI call setup message. The ANI, DNIS and the additional information can be displayed on appropriately equipped CPE devices.

By the nature of the invention, certain call related events that an agent may perform may not be known to the ACD system. This is related to the fact that after a successful TBCT transfer of a customer call to the agent, the ACD system is no longer part of the call path. For example, if a customer call is transferred to a first agent by the ACD system, and then the first agent transfers the customer call to a second agent using a Centrex call transfer feature, the ACD system is not notified that the Centrex transfer has occurred and does not know that the first agent is available to take calls and that the second agent is occupied with a call. This situation can be handled by establishing special purpose numbers on the ACD system to perform operations such as call transfers to another agent. In this manner, the ACD system performs the call function and is aware of the instant status of the agent stations.

Although FIG. 2 shows connection 14 between customer telephone 13 and switch 12, connections 16 between agent stations 15 and switch 12 and PRI span 11 between ACD system 10 and switch 12 as direct connections, each of these connections can, and typically will, comprise several network elements, including switches, various transmission media and related equipment.

Although the preferred embodiment shows the ACD administrative functions being handled remotely over an Internet interface from an Administrative workstation, these functions can be handled using any of numerous known techniques. For example, a dial-up modem connection can be established between a remote user and the ACD system over which administrative functions are performed. Also, if ACD system 10 comprises a general or special purpose computer, administrative functions could be performed locally using the computer's keyboard.

It is intended that the scope of the invention be defined by the claims appended hereto and their equivalents.

## Claims

1. An automatic call distribution system for use in a telephone network having a switch, comprising:
an Integrated Services Digital Network Primary Rate Interface connected to said switch over one or more Primary Rate Interface spans; and
automatic call distribution functionality communicating with said Interface;
said Interface operated to receive one or more customer calls over said spans;
said automatic call distribution functionality operated to select an agent to handle each of said customer calls;
said Interface further operated to place a call to each of said agents; and
said Interface further operated to exchange Two B-Channel Transfer messages with said switch to cause each of said customer calls and said associated agent calls to be directly connected.

2. An automatic call distribution system according to claim 1, wherein said Interface is further operated to exchange said Two B-Channel Transfer messages when said agent calls are answered.

3. An automatic call distribution system according to claim 1, wherein said Interface is further operated to exchange said Two B-Channel Transfer messages when said agent calls begin alerting.

4. An automatic call distribution system according to claim 1, wherein said Interface is further operated to receive notify messages when said directly connected customer calls and said associated agent calls are cleared, and to pass these notify messages to said automatic call distribution functionality.

5. An automatic call distribution system according to claim 1, wherein said Interface is further operated to receive call related information related to said customer calls and to pass this information to said automatic call distribution functionality.

6. An automatic call distribution system according to claim 5, wherein said automatic call distribution functionality is further operated to provide said customer call related information to said interface for transmission with said agent calls.

7. An automatic call distribution system according to claim 1, further comprising an Internet interface operated to connect to an administrative workstation.

8. On a computer, an automatic call distribution system for use in a telephone network having a switch, comprising:
an Integrated Services Digital Network Primary Rate Interface connected to said switch over one or more Primary Rate Interface spans; and
automatic call distribution functionality communicating with said Interface;
said Interface operated to receive one or more customer calls over said spans;
said automatic call distribution functionality operated to select an agent to handle each of said customer calls;
said Interface further operated to place a call to each of said agents;
said Interface further operated to exchange Two B-Channel Transfer messages with said switch to cause each of said customer calls and said associated agent calls to be directly connected.

9. An automatic call distribution system according to claim 8, wherein said Interface is further operated to exchange said Two B-Channel Transfer messages when said agent calls are answered.

10. An automatic call distribution system according to claim 8, wherein said Interface is further operated to exchange said Two B-Channel Transfer messages when said agent calls begin alerting.

11. An automatic call distribution system according to claim 8, wherein said Interface is further operated to receive notify messages when said directly connected customer calls and said associated agent calls are cleared, and to pass these notify messages to said automatic call distribution functionality.

12. An automatic call distribution system according to claim 8, wherein said Interface is further operated to receive call related information related to said customer calls and to pass this information to said automatic call distribution functionality.

13. An automatic call distribution system according to claim 12, wherein said automatic call distribution functionality is further operated to provide said customer call related information to said interface for transmission with said agent calls.

14. An automatic call distribution system according to claim 8, further comprising an Internet interface operated to connect to an administrative workstation.

15. A method for operating an automatic call distribution system connected to a switch in a telephone network by an Integrated Services Digital Network Primary Rate Interface, comprising:
receiving customer calls;
selecting an agent to handle each of said customer calls;
placing a call to each of said agents;
exchanging Two B-Channel Transfer messages with said switch to cause said customer calls and said associated agent calls to be directly connect.

16. A method according to claim 15, wherein said exchanging further comprises exchanging said Two B-Channel Transfer messages when said agent calls are answered.

17. A method according to claim 15, wherein said exchanging further comprises exchanging said Two B-Channel Transfer messages when said agent calls begin alerting.

18. A method according to claim 15, further comprising receiving notify messages when said directly connected customer calls and said associated agent calls are cleared.

19. A method according to claim 15, wherein said receiving further comprises receiving customer call related information.

20. A method according to claim 19, wherein said placing further comprises transmitting said customer call related information with said agent calls.
